# NEW EUROPEAN PATENT SPECIFICATION

(11) **EP 1 023 986 B2**
(45) Date of publication and mention of the opposition decision: **18.01.2012**
(45) Mention of the grant of the patent: 14.04.2004
(21) Application number: 99200254.3
(22) Date of filing: 28.01.1999
(51) Int. Cl.: B29C 70/24

(54) **Reinforcing member of composite workpieces and associated methods**
Verstärkungselement für Verbundwerkstoffteile und dazugehörige Verfahren
Elément de renforcement d'articles composites et procédés associés

(43) Date of publication of application: 02.08.2000
(73) Proprietor: McDONNELL DOUGLAS CORPORATION, Seal Beach, California 90740-1515 (US)
(72) Inventor: Palmer, Raymond J., Newport Beach, California 92663 (US); Sahr, Branko, Huntington Beach, California 92648 (US)
(74) Representative: Land, Addick Adrianus Gosling

(56) References cited:
- EP-A1- 0 556 088
- WO-A-96/20073
- WO-A-97/16303
- FR-A1- 2 655 976
- US-A- 5 466 506
- US-A- 5 589 015
- US-A- 5 827 383

## Description

### FIELD OF THE INVENTION

This invention relates to fiber reinforced composite structures, and more particularly relates to reinforcing members for such composite structures.

### BACKGROUND OF THE INVENTION

In relatively recent years, fiber reinforced composite parts have replaced parts and components previously made of structural metals, such as steel, aluminum and the like. This is particularly true in the aircraft industry, where it is recognized that the reinforced composite components can provide at least the same degree of strength and structural integrity as conventional materials, and oftentimes with significantly less weight and cost. Many of the reinforced components are made with reinforced cloth, which is ultimately formed to a desired shape, impregnated with a hardenable resin and cured to form a rigid structure.

The advantages achieved by stitching, such as, for example, loop stitching through fiber reinforced composite components for reinforcing two abutting components in a secured position and to resist delamination and peel forces, has been well established. See, for example, U.S. Patent No. 4,256,790 to Lackman, et al., which teaches the sewing of a series of stitches through the thickness of panels while they are in a staged condition, which allows the two panels to be co-cured as assembled and form a strong reinforced composite structure. U.S. Patent No. 4,206,895 to Olez, also discloses the strengthening of a joint in a bonded fiber structure of two or more fiber reinforced components by the use of high strength threads inserted through the joint.

Obtaining a three-dimensional reinforcement in a tight, restricted area, as, for example, between stiffeners and intercostals of a stiffened skin structure, is difficult, and in many cases, virtually impossible with conventional stitching machines. The use of stitching, as, for example, shown in the Olez Patent No. 4,206,895, and in the Lackman, et al. Patent No. 4,256,790, has improved damage tolerance and resistance to delamination, peel and tensile pull-off loads. Moreover, this three-dimensional stitching has been found to be effective in reducing in-plane shear in laminated structures.

Due to the size and construction of conventional stitching machines, however, the location and the overall size of the bobbins (or loopers, which are used in chain stitching) greatly restrict the area in which stitching may be accomplished. Consequently, in many areas where three-dimensional reinforcement would be desired, conventional automatic stitching is not an option because of the difficulty, if not impossibility, of operating the stitching machines in confined and restricted areas.

Tufting has also been considered as a means of three-dimensional reinforcement in confined and restricted areas. However, tufting is limited in that it does not retain the compaction of the dry fiber preforms which is achieved by conventional stitching which is not tufted.

Stapling, although having some advantages, is usually performed with staples formed of metal, and metal in certain cases may be unacceptable. As a simple example, metal components are electrically conductive, and electrical conductivity may be undesirable in certain applications. Effective thermoplastic staples are not yet available. There have even been attempts to make individual pins from carbon fibers and a thermoplastic resin, which are extruded. However, these pins are very costly to make, and furthermore, they are quite labor-intensive when installed, even though they may improve the desired properties of the components in which they are used.

U.S. Patent No. 4,528,051 to Heinze, et al. discloses a method for strengthening fiber reinforced components using a multitude of metal or synthetic material pins driven into the layers of fibers and resin of adjacent structural components. The resin is then cured with the pins in place to improve the strength of the structural components and to prevent the peeling of one layer away from an adjacent layer. In certain embodiments, the pins are flexible and formed of Kevlar® thread. A stitching mechanism or sewing machine is used to insert the threads. As such, these embodiments suffer from the disadvantage noted above; namely, that the stitching operation cannot be performed in confined and restricted areas.

Other embodiments of the Heinze patent use stiff metal pins inserted in a pin carrier in the form a belt or webbing. The webbing may be bonded to one of the fiber reinforced composite components after the metal pins have been inserted. However, the use of conductive metal components can be disadvantageous as noted above.

In addition, the highly flexible nature of the webbing can make the process of inserting the pins, unless applied using the illustrated roller apparatus, cumbersome and manually intensive.

US-A-5 589 015 discloses a method of securing a pair of workpieces to each other whereby said method comprises the steps of: positioning a first workpiece; positioning a second workpiece such that a first face of the second workpiece is in face-to-face contact with the first workpiece and an opposite second face is spaced therefrom by the thickness of the second workpiece; positioning, adjacent to the second face of the second workpiece, a reinforcing member having a connecting member and a plurality of pins connected thereto formed of a hardened fiber reinforcing thread; pressing the free ends of the reinforcing member through the second workpiece and into the first workpiece to secure the second workpiece to the first workpiece.

Accordingly, there has been a need for a reinforcing member which can be used for securing two or more reinforced components together in restricted and confined areas. More specifically, there has been a need for a reinforcing member which can be used for securing intercostals and stiffeners ("T" stiffeners in 0^{0,} 90⁰ or other orientations relative to one another) to a reinforced plastic skin, particularly in confined and limited spaces. Such a reinforcing member would preferably be non-conductive and be capable of being fairly easily integrated into the reinforced composite structure.

### SUMMARY OF THE INVENTION

The present invention includes a reinforcing member, in accordance with claim 1, a method of making a reinforcing member, in accordance with claim 7, and a method of securing a pair of workpieces to each other, in accordance with claim 18. As indicated previously, the invention is effective in actually securing two or more reinforced composite pieces together.

Very frequently, it is necessary to secure components, such as intercostals and stiffeners to preforms, that is, reinforced composite parts which may be in dry stitched fiber near-net shape preform condition or may be pre-impregnated, but which have not yet been cured to a final or C-stage.

In accordance with the method of the invention, the method comprises providing a central core which is capable of being removed from the reinforcing member when the latter is formed in the core. The method comprises stitching a plurality of fiber reinforcing threads at closely spaced apart locations through this removable core. In this case, the threads are relatively straight when they penetrate the core.

The method also comprises the physical cross-linking one of the common ends of each of the threads with a connecting member. In other words, the common ends of each of the threads are secured together in the stitching operation in a physical cross-linking, thus forming an open mesh supporting structure. This cross-linking of the threads forms a grid in the open mesh structure where the common ends of the thread are secured to the grid, and the opposite ends are free ends of the threads which will ultimately be provided with points for penetrating into a reinforcing member, such as a preform.

After the stitching has been completed in the core, the threads passing through the core are hardened in a manner to be hereinafter described, and thereby form generally straight pins which are connected to one another by the aforesaid cross-linking grid. After the grid with the pins has been formed in the core, the structure or grid is ready to be stabilized.

In a preferred embodiment, the reinforcing member is formed of reinforced composite reinforcing threads, such as glass, Kevlar®, carbon fiber threads, etc. However, they are not necessarily initially impregnated with a curable matrix, such as a resin. After formation in the core, they can then be impregnated with a curable matrix, and hardened.

After the grid with the pins integral therewith have been formed, one advantageous step of the method of the invention is to provide a sharpened point on the free ends of each of the pins so that they are capable of penetrating into a preform. It has been found in accordance with the present invention that when the free ends or second ends of the pins are ground to bevelled angle, e.g., 45°, with respect to the central axis of the pins, that penetration into a preform is greatly enhanced.

The core is then removed. Removal of the core may take place by any of a number of procedures. In one advantageous embodiment, the core is a foam core which may be dissolvable, either in a polar or a non-polar liquid solvent. Thus, after hardening of the reinforcing member with the core in place, the entire reinforcing member can be introduced into the liquid where the core itself becomes dissolved.

In another embodiment of the invention, the core may adopt the form of a foam material which is capable of being rapidly degraded and disintegrated in the presence of heat. Thus, curing of the resin and elimination of the core can take place in a single operation, such that the heat virtually destroys the foam material to thereby cause removal of same.

The reinforcing member of the invention is effective in that it can be used in a tightly restricted area where space is not available to achieve the stitching obtained by a conventional stitching machine. Although the three dimensional stitching is highly effective, it has been found that by using a three-dimensional reinforcement of the type provided in accordance with this invention, there is an excellent influence on damage tolerance and delamination. There has been found to be a substantial increase in peel strength resistance, tensile pull-off and in-plane shear properties. Moreover, by using these reinforcing members, the properties obtained are similar to those acquired with conventional stitching. The entire reinforced structure may then be impregnated with resin and cured by conventional methods to develop the desired mechanical properties.

This invention possesses many other advantages and has other purposes which may be made more clearly apparent upon consideration of the forms in which it may embodied. One of the forms of the method and one of the actual reinforcing members is more fully illustrated in the accompanying drawings, and described in the following detailed description. However, it is to be understood that these accompanying drawings and this detailed description are set forth only for purposes of illustrating the general principles of the invention, and are not to be taken in a limiting sense.

### BRIEF DESCRIPTION OF THE DRAWINGS

Having thus described the invention in general terms, reference will now be made to the accompanying drawings in which:
Figure 1 is a perspective view showing the formation of a reinforcing member in a removable core in accordance with the present invention;
Figure 2 is a side-elevational view of the reinforcing member formed in a core and being comprised of needle threads and bobbin threads;
Figure 3 is a perspective view of a pair of opposed completely formed reinforcing members in accordance with the present invention;
Figure 4 is an enlarged schematic perspective view showing the attachment of two components with reinforcing members in accordance with the present invention;
Figure 5 is a side view of a grinding tool for cutting the free ends of the pins forming part of the reinforcing member in accordance with the present invention; and
Figure 6 is a fragmentary schematic perspective view showing the use of reinforcing members for securing stiffeners and intercostals to a skin structure in accordance with the present invention; and
Figure 7 is a flow chart showing the steps involved in the method of the present invention.

### DETAILED DESCRIPTION

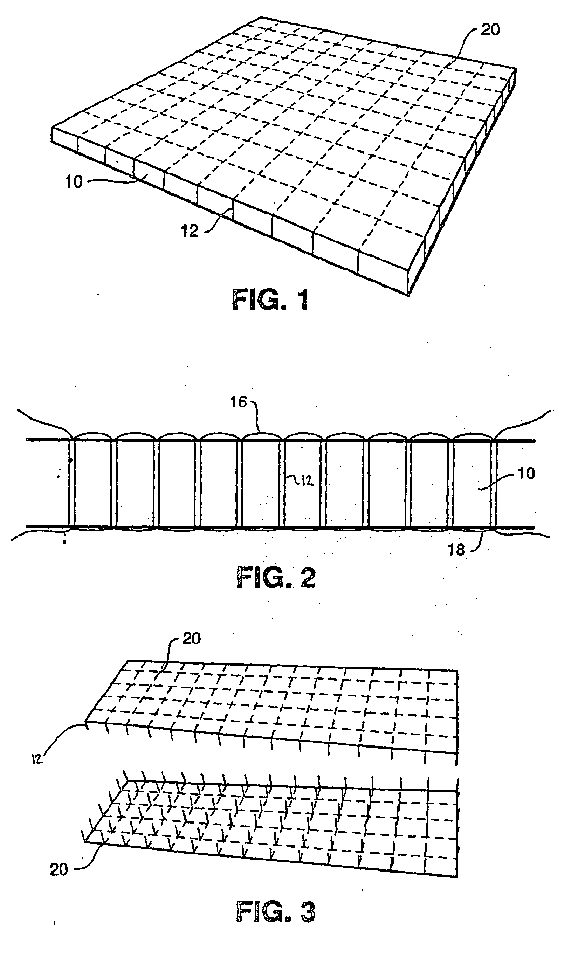

Referring in more detail and by reference characters to the drawings which illustrate a preferred embodiment of the present invention, Figures 1, 2 and 7 show a method of making a reinforced plastic composite reinforcing member in accordance with the invention.

Referring now to Figure 1, it can be seen that a core, which is a removable core, such as a foam core 10, is provided. Using conventional stitching techniques with a conventional stitching machine (not shown), the foam core 10 is provided with pin-forming threads 12 extending from the upper surface of the core to the bottom surface thereof. These pin-forming threads have a length equal to the thickness of the foam core, usually between 0,64 cm (1/4th inch) and 2,54 cm (1 inch). With regard to stitch density, the stitch fibers can have a spacing of about 0,32 cm (1/8th of an inch), with a 0.51cm (1/5th inch) step. As such, each row will have 8 stitches per 2,54 cm (inch) and there will be 5 stitch rows per 2,54 cm (inch). If the stitching is rotated 90° and the same stitch pattern is repeated, it will provide an overall stitch density of 80 penetrations per square inch. However, it will be appreciated that the density of the stitches can vary.

Individual columns of stitches are first formed, that is, from one transverse side to the opposite transverse side of the foam core. Thereafter, the foam core is rotated 90° and stitching occurs from one longitudinal side to the opposite longitudinal side. This produces a grid of stitches in a generally square or rectangular array.

By reference to Figures 1 and 2 of the drawings, it can be seen that when the fibers are impregnated and cured, each of the threads forms a vertical pin **12** extending through the foam core **10**. Each of the stitches will form a connecting member **16** from the needle thread at the upper ends as shown. These extend between and connect each of the individual pin-forming threads **12** which, in effect, form relatively rigid pins, as hereinafter described. At their lower ends, bobbin threads **18** are formed, and which also may initially connect each of the individual pin-forming threads elements **12** on the bottom side of the foam core **10**. The example shown is of a two thread stitch including an upper penetration needle thread and a lower locking thread supplied by a standard "lock" stitch sewing technique. A single thread chain stitch machine may be used to form the grid from a single thread if desired.

The connecting member threads **16**, in combination, all form a reinforcing member **20** in the form of a physical cross-linking grid structure for each of the pins **12**, and connect each of the pins in this grid-like arrangement. In this respect, the reinforcing member **20** is an open mesh structure such that each of the pins **12** is integrally formed with and extends outwardly from connecting members **16** at an angle of about 90° thereto.

The threads are preferably formed of any suitable fiber material of the type used in reinforced plastic composites, and include, for example, fiberglass, carbon, and the like. The thread may also be comprised of various size tows. Some of the other threads which may be used include Kevlar, Dacron, and nylon. The composite yarns in the dry fiber condition are sufficiently flexible to be sewn through the core. The same threads impregnated with a dry, flexible "B" stage resin, compatible with the resin used by the final laminate may also be used to form the grid.

In the process of making the reinforced plastic composite reinforcing members, the structure obtained in accordance with Figure 2 is then resin impregnated with a suitable thermosetting resin. Again, any of the resins normally used in reinforced plastic composites may be used for this purpose.

Curing of the resin impregnated thread stitches may then occur with any conventional curing mechanism. Typically, with most resins, when heated, the resins will cure to a C-stage where the composite is in a rigid stage. In this condition, the threads **12** become relatively rigid pins.

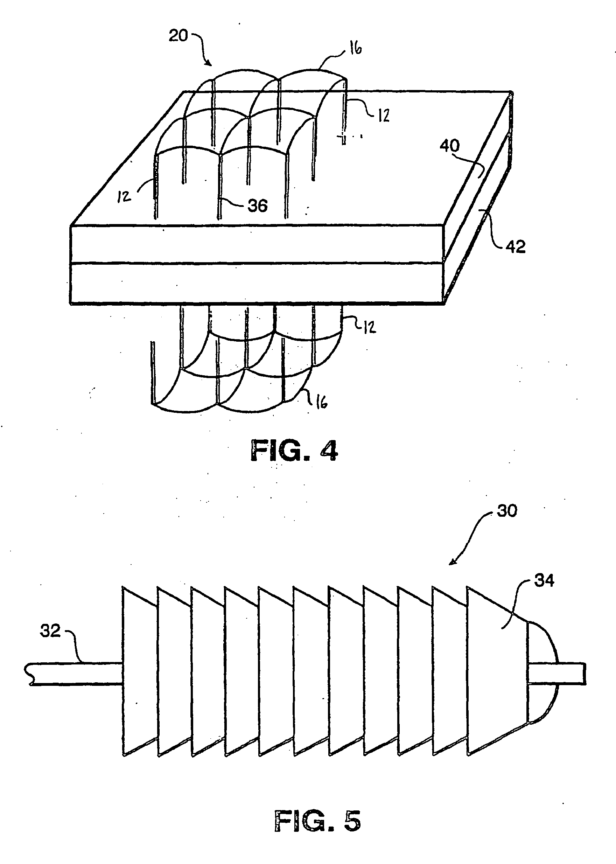

After the formation of a relatively rigid reinforcing member **20** which is still imbedded in the foam core **10**, the bobbin threads **18** are effectively removed and the ends of the pins **12** are ground with a tool **30** of the type as shown in Figure 5. In this case, it can be seen that the tool **30** is provided with an elongate shank or handle **32** and has a plurality of tapered grinding heads **34** with sharpened circular edges having a 0,32 cm (1/8th inch) spacing in this case. As these grinding heads **34** grind against the lower ends of the stitches **12**, they will provide a tapered end and preferably a 45°±30° angled cut on the ends of each of the pins **12** relative to the central axis of the pin **12**. This enables each pin **12** to satisfactorily and readily penetrate a preform with minimum structural fiber damage to the preform. Moreover, the 0,32 cm (1/8th inch) spacing of the various pins is accurate and in one pass, a tool **30** will sharpen all of the pins.

At this point in the process, the core **10** is removed in order to obtain a reinforcing member of the type shown in Figures 3 and 4. In this case, it can be seen that the reinforcing member **20** comprises the grid structure having the individual pins **12** extending outwardly therefrom. Moreover, each of the free ends **36** of the pins **12** are tapered. The reinforcing member **20** is an open mesh grid structure, as aforesaid, and allows some flexibility in enabling the pins to conform to irregularities in the surface contour of the reinforced plastic preform in which the pins are to be inserted.

The foam which is used is for the core 10 is preferably a polystyrene foam. With this material, solvents may be used to dissolve the foam or otherwise-heat may be used to degrade and effectively destroy the foam. Similarly, a core made of wax having a high melting temperature (such as 177°C (350°F)) could be used. The resin in the reinforcing member 20 is cured at approximately 121-149°C (250-300°F) and thus the wax core can be melted from the reinforcing member after the reinforcing member has been at least partially cured. Any remaining wax can be cleaned away with a degreasing unit. Other suitable core materials include liquid soluble components such as a water soluble rigid foam or soft plaster.

The tensile strength of the formed pins is over 17237 bar (250,000 psi). By comparison, the maximum tensile strength of any injection molded pin or rod is roughly 2068-2758 bar (30,000 to 40,000 psi). Thus, resistance to tensile pull-off, delamination and peel is great when using an oriented fiber reinforcing thread as according to the present invention.

Figure 4 illustrates an arrangement in which two composite sheet workpieces **40** and **42** are disposed in facewise engagement and may be reinforced by means of one or two reinforcing members **20** of the type created in accordance with the present invention. Thus, and in this case, the two sheets **40** and **42** are preforms and the pins on each of the opposed reinforcing members **20**, will be inserted into each of the preforms to thereby physically hold the same together. In this respect, it should be understood in connection with the present invention that the reinforcing members **20** are highly effective with preforms. The preform workpieces **40, 42** may be either in a wet or a dry form. Thus, they may be pre-impregnated but not cured until the reinforcing members **20** have been positioned in place. Moreover, they can be dry and ultimately impregnated when the reinforcing members **20** have been located in a reinforcing position.

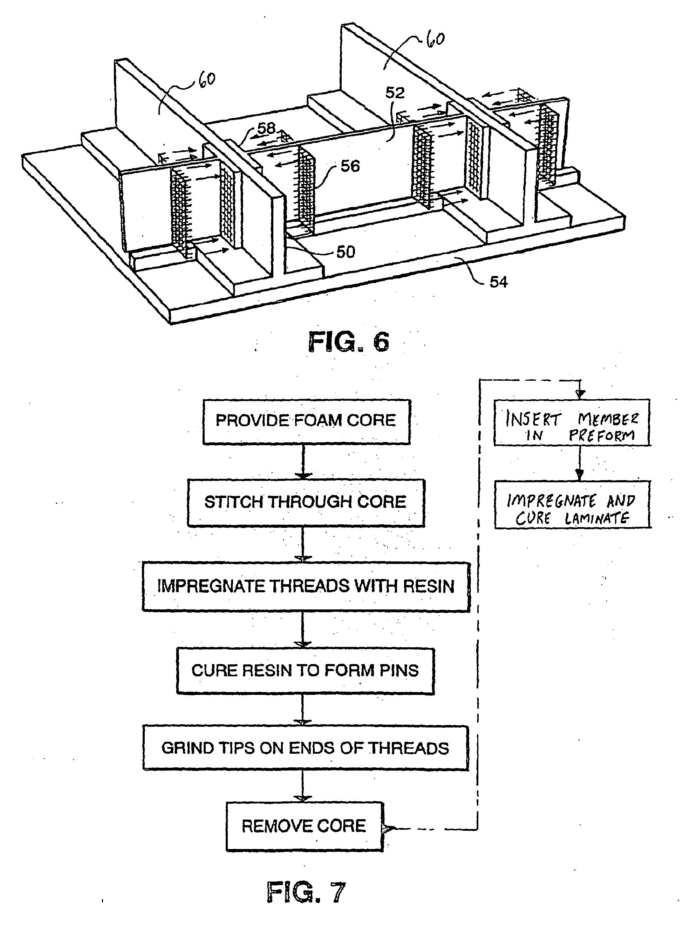

Figure 6 shows an arrangement in which the reinforcing members are used to secure the stringers **50** and the web flanges **58** of the intercostals **52** together. This framework thus provides support for a preform sheet **54**. Figure 6 shows the use of reinforcing members **20** in accordance with the present invention being secured to a web flange **58** of the intercostal **52** and into the web **60** of the respective stringer **50**. Although not specifically shown in Figure 6, additional reinforcing members could be used for securing the base flange **56** of the stringers **50** to the sheet **54** to obtain extra localized strength properties. In addition, the joints between the various components may have been stitched, to the extent practicable, prior to the application of the reinforcing members **20** of the present invention to compact the respective preforms.

When using the reinforcing members **20** of the invention, the pins **12** are inserted into the relatively soft preform material and then all of the components are subjected to curing as, for example, by heating. As this occurs, the resin impregnated into the preform workpiece and into or around the pins and the grid of the reinforcing member will cause a fusing or bonding of the reinforcing member to the preform and become an integral part of the structure.

Figure 7 shows an overall step procedure of making and installing the 3-D grid into a preform and final resin impregnation and cure to make the desired enhanced damage-tolerant structure. Thus, there has been illustrated and described a unique and novel method of making and applying a 3-D grid reinforced plastic composite reinforcing member which thereby fulfills all of the objects and advantages which have been sought.

It should be understood that many changes, modifications, variations and other uses and applications will become apparent to those skilled in the art after considering this specification and the accompanying drawings.

## Claims

1. A reinforcing member for reinforcing at least one workpiece, whereby said reinforcing member (20) comprises
- a connecting member (16); and
- a plurality of pins (12), each of said pins being formed of a hardened fiber reinforcing thread which is sufficiently stiff to allow the respective free end of the pin to be driven into the workpiece, wherein
- said connecting member (16) is also formed of a hardened fiber reinforcing thread, and each pin (12) has an end integrally connected to said connecting member (16), and extending from it, and an opposite free end, wherein said plurality of pins are arranged in a grid pattern having a plurality of rows and columns.

2. A reinforcing member as defined in Claim 1 wherein the hardened reinforced thread of the pins is impregnated with a curable resin which is at least partially cured.

3. A reinforcing member as defined in Claim 1 or 2 wherein said connecting member comprises a fiber reinforcing thread.

4. A reinforcing member as defined in Claim 1 wherein the fiber reinforcing thread of the connecting member is impregnated with a curable resin which is at least partially cured so as to form a pliable structure which can be conformed to accommodate irregularities in the surface of the workpiece.

5. A reinforcing member as defined in any of Claims 1-2 wherein the free ends of the pins are sharpened to facilitate being driven into the workpiece.

6. A reinforcing member as defined in Claim 5 wherein the sharpened free ends of the pins are bevelled at an angle of about 45 with respect to the central axis of the respective pin.

7. A method of making a reinforcing member according to any of the claims 1-6, said method comprising the steps of:
- stitching at least one fiber reinforcing thread into a core (10) to form a plurality of pins (12),
- driving a portion of the thread into the core to a predetermined depth to form a pin, extending another portion of the thread to a position spaced from the pin,
- driving yet another portion of the thread into the core to a predetermined depth to form another pin spaced from the previous pin and a connecting member extending between the respective pins;
- hardening at least the portion of the thread driven into the core so that the resultant pins are sufficiently stiff to be driven into the workpiece; and
- removing the core to form a reinforcing member having a plurality of rigid pins connected by at least one connecting member (16), wherein
- said hardening step further comprises impregnating the portions of the threads in the core with a curable resin and thereafter at least partially curing the resin to form the rigid pins.

8. A method of making a reinforcing member as defined in Claim 7 further comprising the steps of impregnating the connecting member with a curable resin and thereafter at least partially curing the resin to form a pliable structure with can be conformed to accomodate irregularities in the surface of the workpiece.

9. A method of making a reinforcing member as defined in Claim 7 or 8 wherein said stitching step further comprises forming a plurality of stitches aligned in a row.

10. A method of making a reinforcing member as defined in Claim 7, 8 or 9 wherein said stitching step further comprises forming a plurality of stitches in a grid pattern having a plurality of rows and columns.

11. A method of making a reinforcing member as defined in any of claims 7-10 comprising the further step of sharpening the free ends of the pins after said hardening step.

12. A method of making a reinforcing member as defined in Claim 11 wherein said sharpening step further comprises bevelling the free end of each pin at an angle relative to the central axis of the respective pin.

13. A method of making a reinforcing member as defined in Claim 11 wherein said sharpening step further comprises grinding the free ends of the pins simultaneously with a common grinding tool.

14. A method of making a reinforcing member as defined in any of Claims 7-12 wherein said step of removing the core further comprises pulling the pins and connecting member from the core.

15. A method of making a reinforcing member as defined in any of Claim 7-12 wherein said stitching step further comprises driving the portion of thread into a core made of a foam material.

16. A method of making a reinforcing member as defined in Claim 13 wherein said step of removing the core further comprises applying a solvent to dissolve the foam core.

17. A method of making a reinforcing member as defined in Claim 13 wherein said step of removing the core further comprises heating the core to disintegrate the foam material.

18. A method of securing a pair of workpieces (40,42;50,52,54,58,60) to each other, said method comprising the steps of:
- positioning a first workpiece (40);
- positioning a second workpiece (42) such that a first face of the second workpiece is in face-to-face contact with the first workpiece and an opposite second face is spaced therefrom by the thickness of the second workpiece;
- positioning, adjacent to the second face of the second workpiece, a reinforcing member (20) according to any of the claims 1-6; and
- pressing the free ends of the pins of the reinforcing member through the second workpiece and into the first workpiece to secure the second workpiece to the first workpiece.

19. A method of securing workpieces as defined in Claim 18 wherein the steps of positioning the first and second workpieces further comprise positioning first and second workpieces formed of a fiber reinforced composite material.

20. A method of securing workpieces as defined in Claim 18 or 19 comprising the further steps of impregnating the workpieces with a curable resin and then, after said step of pressing the pins into the workpieces, curing the workpieces to create a rigid reinforced structure.

21. A method of securing workpieces as defined in Claim 18, 19 or 20 wherein said impregnating step is performed after said step of pressing pins into the workpieces.

## Patentansprüche

1. Verstärkungsteil zum Verstärken mindestens eines Werkstücks, wobei das Verstärkungsteil (20) umfasst
- ein Verbindungsteil (16); und
- eine Vielzahl von Stiften (12), wobei jeder der Stifte aus einem gehärteten faserverstärkenden Strang gebildet ist, welcher ausreichend steif ist, dass das entsprechende freie Ende des Stifts in das Werkstück getrieben werden kann, wobei
- das Verbindungsteil (16) ebenfalls aus einem gehärteten faserverstärkenden Strang gebildet ist, und jeder Stift (12) ein einheitlich mit dem Verbindungsteil (16) verbundenes Ende und sich davon erstreckend ein freies Gegenende aufweist, wobei die Vielzahl von Stiften in einem Gittermuster angeordnet sind, welches eine Vielzahl von Reihen und Spalten aufweist.

2. Verstärkungsteil wie in Anspruch 1 definiert, wobei der gehärtete verstärkte Strang der Stifte mit einem aushärtbaren Harz imprägniert ist, welches zumindest teilweise ausgehärtet ist.

3. Verstärkungsteil wie in Anspruch 1 oder 2 definiert, wobei das Verbindungsteil einen faserverstärkenden Strang umfasst.

4. Verstärkungsteil wie in Anspruch 1 definiert, wobei der faserverstärkende Strang des Verbindungsteils mit einem aushärtbaren Harz imprägniert ist, welches zumindest teilweise ausgehärtet ist, um eine formbare Struktur auszubilden, welche angeformt werden kann, um sich Unregelmäßigkeiten der Oberfläche des Werkstücks anzupassen.

5. Verstärkungsteil wie in einem der Ansprüche 1 - 2 definiert, wobei die freien Enden der Stifte angespitzt sind, um das Treiben in das Werkstück zu erleichtern.

6. Verstärkungsteil wie in Anspruch 5 definiert, wobei die angespitzten freien Enden der Stifte in einem Winkel von ungefähr 45° bezüglich der Mittelachse des entsprechenden Stifts abgeschrägt sind.

7. Verfahren zur Herstellung eines Verstärkungsteils gemäß einem der Ansprüche 1 - 6, wobei das Verfahren die Schritte umfasst:
- Einstechen mindestens eines faserverstärkenden Strangs in einen Trägerkörper (10), so dass eine Vielzahl von Stiften (12) ausgebildet wird,
- Treiben eines Abschnitts des Strangs bis zu einer vorbestimmten Tiefe in den Trägerkörper, so dass ein Stift gebildet wird, Ausdehnen eines weiteren Abschnitts des Strangs zu einer von dem Stift entfernten Position,
- Treiben noch eines weiteren Abschnitts des Strangs bis zu einer vorbestimmten Tiefe in den Trägerkörper, so dass ein weiterer, von dem vorherigen Stift entfernter Stift und ein sich zwischen den entsprechenden Stiften erstreckendes Verbindungsteil ausgebildet wird,
- Härten zumindest des in den Trägerkörper getriebenen Abschnitts des Strangs, so dass die resultierenden Stifte ausreichend steif sind, um in das Werkstück getrieben zu werden; und
- Entfernen des Trägerkörpers, so dass ein Verstärkungsteil gebildet wird, welches eine Vielzahl von steifen Stiften, welche durch zumindest ein Verbindungsteil (16) verbunden sind, aufweist, wobei
- der Härtungsschritt darüber hinaus ein Imprägnieren der Abschnitte der Stränge in dem Trägerkörper mit einem aushärtbaren Harz und danach zumindest teilweise Aushärten des Harzes umfasst, um die steifen Stifte auszubilden.

8. Verfahren zur Herstellung eines Verstärkungsteils wie in Anspruch 7 definiert, darüber hinaus umfassend die Schritte:
Imprägnieren des Verbindungsteils mit einem aushärtbaren Harz und danach zumindest teilweise Aushärten des Harzes, um eine verformbare Struktur zu bilden, welche angeformt werden kann, um sich Unregelmäßigkeiten in der Oberfläche des Werkstücks anzupassen.

9. Verfahren zur Herstellung eines Verstärkungsteils wie in Anspruch 7 oder 8 definiert, wobei der Einstechschritt darüber hinaus ein Ausbilden einer Vielzahl von Stichen in einer Reihe umfasst.

10. Verfahren zur Herstellung eine Verstärkungsteils wie in Anspruch 7, 8 oder 9 definiert, wobei der Einstechschritt darüber hinaus ein Ausbilden einer Vielzahl von Stichen in einem Gittermuster, welches eine Vielzahl von Reihen und Spalten aufweist, umfasst.

11. Verfahren zur Herstellung eine Verstärkungsteils wie in einem der Ansprüche 7 - 10 definiert, umfassend den weiteren Schritt eines Anspitzens der freien Enden der Stifte nach dem Härtungsschritt.

12. Verfahren zur Herstellung eines Verstärkungsteils wie in Anspruch 11 definiert, wobei der Anspitzschritt darüber hinaus ein Abschrägen des freien Endes jedes Stifts in einem Winkel bezüglich der Mittelachse des entsprechenden Stifts umfasst.

13. Verfahren zur Herstellung eines Verstärkungsteils wie in Anspruch 11 definiert, wobei der Anspitzschritt darüber hinaus ein Schleifen der freien Enden der Stifte gleichzeitig mit einem gemeinsamen Schleifwerkzeug umfasst.

14. Verfahren zur Herstellung eines Verstärkungsteils wie in einem der Ansprüche 7 - 12 definiert, wobei der Schritt des Entfernens des Trägerkörpers darüber hinaus ein Ziehen der Stifte und des Verbindungsteils aus dem Trägerkörper umfasst.

15. Verfahren zur Herstellung eines Verstärkungsteils wie in einem der Ansprüche 7 - 12 definiert, wobei der Einstechschritt darüber hinaus ein Treiben des Strangabschnitts in einen Trägerkörper aus einem Schaummaterial umfasst.

16. Verfahren zur Herstellung eines Verstärkungsteils wie in Anspruch 13 definiert, wobei der Schritt des Entfernens des Trägerkörpers darüber hinaus eine Verwendung von Lösungsmittel zum Auflösen des Schaumträgerkörpers umfasst.

17. Verfahren zur Herstellung eines Verstärkungsteils wie in Anspruch 13 definiert, wobei der Schritt des Entfernens des Trägerkörpers ein Aufheizen des Trägerkörpers zum Zersetzen des Schaummaterials umfasst.

18. Verfahren zum Befestigen eines Paares von Werkstücken (40, 42; 50, 52, 54, 58, 60) aneinander, wobei das Verfahren die Schritte umfasst:
- Positionieren eines ersten Werkstücks (40);
- Positionieren eines zweiten Werkstücks (42), so dass eine erste Seitenfläche des zweiten Werkstücks in flächigem Kontakt mit dem ersten Werkstück ist und eine gegenüberliegende zweite Seitenfläche davon um die Dicke des zweiten Werkstücks entfernt angeordnet ist;
- Positionieren eines Verstärkungsteils gemäß einem der Ansprüche 1 - 6 benachbart zu der zweiten Seitenfläche des zweiten Werkstücks; und
- Drücken der freien Enden der Stifte des Verstärkungsteils durch das zweite Werkstück hindurch und in das erste Werkstück hinein, so dass das zweite Werkstück an dem ersten Werkstück befestigt wird.

19. Verfahren zur Befestigung von Werkstücken wie in Anspruch 18 definiert, wobei die Schritte des Positionierens der ersten und zweiten Werkstücke darüber hinaus ein Positionieren erster und zweiter Werkstücke, die aus einem faserverstärkten Verbundmaterial gebildet sind, umfasst.

20. Verfahren zur Befestigung von Werkstücken wie in Anspruch 18 oder 19 definiert, umfassend die weiteren Schritte eines Imprägnierens des Werkstückes mit einem aushärtbaren Harz und dann, nach dem Schritt des Drückens der Stifte in die Werkstücke, eines Aushärtens der Werkstücke, um eine steife verstärkte Struktur auszubilden.

21. Verfahren zur Befestigung von Werkstücken wie in Anspruch 18, 19 oder 20 definiert, wobei der Imprägnierungsschritt nach dem Schritt des Drückens der Stifte in die Werkstücke durchgeführt wird.

## Revendications

1. Elément de renforcement pour renforcer au moins une pièce, où ledit élément de renforcement (20) comprend :
- un élément de connexion (16) ; et
- une pluralité de tiges (12), chacune desdites tiges étant formée d'un fil de renforcement de fibres durcies qui est suffisamment rigide pour permettre à l'extrémité libre respective de la tige d'être enfoncée dans la pièce, où
- ledit élément de connexion (16) est également formé d'un fil de renforcement de fibres durcies et chaque tige (12) a une extrémité reliée intégralement audit élément de connexion (16), et s'y prolongeant, et une extrémité libre opposée, où ladite pluralité de tiges est disposée selon une configuration en forme de grille ayant une pluralité de rangées et de colonnes.

2. Elément de renforcement selon la revendication 1, où le fil renforcé et durci des tiges est imprégné d'une résine vulcanisable qui est au moins partiellement vulcanisée.

3. Elément de renforcement selon la revendication 1 ou 2, où ledit élément de connexion comprend un fil de renforcement de fibres.

4. Elément de renforcement selon la revendication 1, où le fil de renforcement de fibres de l'élément de connexion est imprégné d'une résine vulcanisable qui est au moins partiellement vulcanisée de manière à former une structure souple qui peut être appropriée pour accommoder des irrégularités dans la surface de la pièce.

5. Elément de renforcement selon l'une quelconque des revendications 1 à 2, où les extrémités libres des tiges sont taillées en pointe de sorte qu'il soit plus facile de les enfoncer dans la pièce.

6. Elément de renforcement selon la revendication 5, où les extrémités libres taillées en pointe des tiges sont biseautées selon un angle d'environ 45 par rapport à l'axe central de la tige respective.

7. Procédé de fabrication d'un élément de renforcement selon l'une quelconque des revendications 1 à 6, ledit procédé comprenant les étapes de :
- coudre au moins un fil de renforcement de fibres à une âme (10) pour former une pluralité de tiges (12),
- enfoncer une partie du fil dans l'âme à une profondeur fixée pour former une tige, prolonger une autre partie du fil jusqu'à une position éloignée de la tige,
- enfoncer encore une autre partie du fil dans l'âme à une profondeur fixée pour former une autre tige éloignée de la tige précédente et un élément de connexion qui s'étend entre les tiges respectives ;
- durcir au moins la partie du fil enfoncée dans l'âme de sorte que les tiges résultantes soient suffisamment rigides pour être enfoncées dans la pièce ; et
- enlever l'âme pour former un élément de renforcement ayant une pluralité de tiges rigides connectées par au moins un élément de connexion (16), où
- ladite étape de durcissement comprend en outre l'imprégnation des parties des fils dans l'âme avec une résine vulcanisable et après cela vulcaniser au moins partiellement la résine pour former des tiges rigides.

8. Procédé de fabrication d'un élément de renforcement selon la revendication 7, comprenant en outre les étapes d'imprégner l'élément de connexion avec une résine vulcanisable et, après cela, de vulcaniser au moins partiellement la résine afin de former une structure souple qui peut être appropriée pour accommoder des irrégularités dans la surface de la pièce.

9. Procédé de fabrication d'un élément de renforcement selon la revendication 7 ou 8, où ladite étape de couture comprend en outre la formation d'une pluralité de points alignés le long d'une rangée.

10. Procédé de fabrication d'un élément de renforcement selon la revendication 7, 8 ou 9, où ladite étape de couture comprend en outre la formation d'une pluralité de points selon une configuration en forme de grille ayant une pluralité de rangées et de colonnes.

11. Procédé de fabrication d'un élément de renforcement selon l'une quelconque des revendications 7-10, comprenant l'autre étape consistant à tailler en pointe les extrémités libres des tiges après ladite étape de durcissement.

12. Procédé de fabrication d'un élément de renforcement selon la revendication 11, où ladite étape de taillage en pointe comprend en outre le biseautage de l'extrémité libre de chaque tige selon un angle relatif à l'axe central de la tige respective.

13. Procédé de fabrication d'un élément de renforcement selon la revendication 11, où ladite étape de taillage en pointe comprend en outre l'aiguisage simultanément des extrémités libres des tiges avec un outil d'aiguisage commun.

14. Procédé de fabrication d'un élément de renforcement selon l'une quelconque des revendications 7-12, où ladite étape consistant à enlever l'âme comprend en outre l'étape consistant à tirer les tiges et l'élément de connexion de l'âme.

15. Procédé de fabrication d'un élément de renforcement selon l'une quelconque des revendications 7-12, où l'étape de couture comprend en outre l'opération consistant à enfoncer la partie du fil dans l'âme fait d'un matériau en mousse.

16. Procédé de fabrication d'un élément de renforcement selon la revendication 13, où ladite étape consistant à enlever l'âme comprend en outre l'application d'un solvant pour dissoudre l'âme en mousse.

17. Procédé de fabrication d'un élément de renforcement selon la revendication 13, où ladite étape consistant à enlever l'âme comprend en outre le chauffage de l'âme afin de désagréger le matériau en mousse.

18. Procédé pour fixer deux pièces (40, 42 ; 50, 52, 54, 58, 60) l'une à l'autre, ledit procédé comprenant les étapes de :
- positionner une première pièce (40) ;
- positionner une seconde pièce (42) de telle sorte qu'une première face de la seconde pièce soit en contact face contre face avec la première pièce et qu'une seconde face opposée en soit séparée par l'épaisseur de la seconde pièce ;
- positionner, attenant à la seconde face de la seconde pièce, un élément de renforcement (20) selon l'une quelconque des revendications 1 à 6; et
- enfoncer les extrémités libres des tiges de l'élément de renforcement à travers la seconde pièce et dans la première pièce afin de fixer la seconde pièce à la première pièce.

19. Procédé pour fixer des pièces selon la revendication 18, où les étapes de positionnement des première et seconde pièces comprennent en outre le positionnement de première et seconde pièces formées à partir d'un matériau composite renforcé de fibres.

20. Procédé pour fixer des pièces selon la revendication 18 ou 19, comprenant les autres étapes d'imprégnation des pièces avec une résine vulcanisable puis, après ladite étape consistant à enfoncer les tiges dans les pièces, de vulcanisation des pièces afin de créer une structure renforcée rigide.

21. Procédé pour fixer des pièces selon la revendication 18, 19 ou 20 où ladite étape d'imprégnation est effectuée après ladite étape consistant à enfoncer les tiges dans les pièces.
